# EUROPEAN PATENT SPECIFICATION

(11) **EP 4 479 010 B1**
(45) Date of publication and mention of the grant of the patent: **31.12.2025**
(21) Application number: 24714779.6
(22) Date of filing: 07.02.2024
(51) Int. Cl.: A61G 5/08, A61G 5/10

(54) **WHEELCHAIR FOR TRANSPORTING PERSONS WITH DISABILITY**
ROLLSTUHL ZUM TRANSPORT VON BEHINDERTEN PERSONEN
FAUTEUIL ROULANT POUR TRANSPORT DE PERSONNES HANDICAPÉES

(30) Priority: 16.02.2023 CZ 20230059
(43) Date of publication of application: 25.12.2024
(73) Proprietor: CV Machining s.r.o., 76001 Zlin, Kudlov (CZ)
(72) Inventor: VANCURA, Cestmir, 76001 Zlin (CZ); VYSTRCILOVA, Vera, 25168 Kamenice (CZ)
(74) Representative: Tomickova, Dana
(86) International application number: PCT/CZ2024/050010
(87) International publication number: WO 2024/170017

(56) References cited:
- FR-A1- 2 399 822
- US-A1- 2017 172 825

## Description

### Technical Field

The present invention relates to wheelchairs. In particular it relates to a wheelchair with height-adjustable seat, which is adapted for transfer to an automobile, in particular preferably to the driver's seat. Such a wheelchair is disclosed in the FR2399822.

### Background of the Invention

In the current state of the art, wheelchairs for transporting persons with disability are known, which are adapted for transport in automobiles. For example, folding wheelchairs are known which can be folded and, for example, placed in the trunk of an automobile after the user has changed seats into the automobile. However, changing seats is a considerable complication, requiring physical fitness of the user or the presence of an assistant. In addition, folding wheelchairs usually provide folding at the expense of comfort, e.g. they have very limited possibilities for adjusting the position of the seat, backrest, footrests or headrests, etc. Positionable wheelchairs designed for setting a number of different positions of these components are also known in the prior art, but they are very robust, so that, for example, they cannot be placed in the trunk of the automobile because they are bulky and too heavy to be lifted or otherwise handled by a person.

An example of a wheelchair designed for easy transport is described, for example, in document EP1417948A1. This wheelchair has an electric drive and a number of mutually positionable components. For transport, for example in an automobile, this wheelchair is disassembled. For this purpose, some of its components are connected to each other by connections which can be disassembled without the need for tools. However, disassembling the wheelchair for transport is not very practical and does not address the possibility of using the wheelchair as a seat in the automobile, where it is convenient to move the wheelchair in and out of the automobile with the user seated.

General requirements for wheelchairs for transporting persons as medical device are defined by a number of standards, for example, ČSN **EN** 12182 (Assistive products for persons with disability, General requirements...), CSN EN 12184 (Electrically powered wheelchairs, scooters, ...), ČSN EN 60601 (Medical electrical equipment).

An example of a mechanism designed to transfer the wheelchair into the automobile with the user seated on the wheelchair is described in document WO2021239169A1. According to this document, the automobile is modified by mounting this mechanism so that the wheelchair serves as an automobile seat while driving. However, the design of the wheelchair which would allow sufficient positioning of the individual components without making it impossible to fold or transfer the wheelchair is not described in this document.

It would therefore be suitable to come up with a solution that would provide a wheelchair for persons with disability which could be transported in an automobile, which would have a wide operational range and which would at the same time provide positionability of the individual components of the wheelchair and could reduce the user's dependence on the assistance of other persons.

### Summary of the Invention

The invention is disclosed in the claims. Shortcomings of solutions known from the state of the art to a certain extent eliminated by a wheelchair for transporting persons with disability comprising a chassis provided with a pair of front wheels and a pair of back wheels, a seat, a backrest, a footrest, a power source, and a travel drive. It can also include a control unit for operating the drives, controlling the recharging, etc. One pair of wheels may be driven, but it may be more preferable in terms of driving properties if all four wheels are driven. The backrest comprises a frame of the backrest and the seat comprises a frame of the seat movably connected to the frame of the backrest, to the footrest, and to the chassis. These movable connections can be rotational, sliding, or rotational and sliding. The front pair of wheels is held by the chassis at a constant distance from the back pair of wheels, or the axes of rotation of these wheels defined by their axles are held at a constant distance. The frame of the seat is connected to the chassis by a positioning arm that is rotationally connected to the frame of the seat at its upper end and rotationally connected to the chassis at its lower end. The rotational connection of the positioning arm to the chassis preferably does not slide relative to the chassis or the wheels when the positioning arm moves relative to the chassis. The positioning arm is therefore not a part of a scissor mechanism. However, it changes its inclination relative to the chassis and the frame of the seat during movement, i.e. it basically tilts relative to the chassis.

In addition, the rotational connection of the positioning arm to the chassis is located at the front third, more preferably the front quarter, of the length of the chassis. Furthermore, the wheelchair comprises a positioning linear drive for tilting the positioning arm relative to the chassis and this drive is connected to the chassis at one end and connected to the positioning arm at the other end. These connections are preferably rotational. The connection between the positioning linear drive and the chassis is located closer to the back wheels than the rotational connection between the positioning arm and the chassis. This ensures that the positioning arm tilts backward, i.e. the center of gravity of the wheelchair moves backward when the arm tilts and the seat moves toward the chassis. Preferably, however, the center of gravity in each position, when the wheelchair is placed on a horizontal surface, remains between the front wheels and the back wheels or their axles / axes of rotation when viewed from above.

The travel drive is preferably an electric motor, wherein the power source is a battery. The driven wheels are preferably the back wheels or all four wheels. When using omnidirectional wheels, it may be more convenient or structurally easier to drive the second pair of wheels. The diameter of the wheels is preferably at least 20 cm, more preferably at least 25 cm. The wheelbase of the wheelchair may be less than or equal to 100 cm, more preferably less than or equal to 80 cm, even more preferably less than 70 cm, for example approximately 60 cm. The small wheelbase of the wheelchair is particularly advantageous due to the possibility of transferring the wheelchair into the automobile. This, preferably in combination with the omnidirectional wheels, as will be described below, ensures good driving properties of the wheelchair - stability when crossing obstacles, small radius of rotation of the wheelchair, etc. The weight of the wheelchair is preferably below 100 kg, more preferably below 90 kg, even more preferably below 80 kg, for example around 75 kg. The dynamic stability (nominal inclination) of the wheelchair is preferably at least 6°, the static stability at least 9°. The height of the obstacle that the wheelchair can cross or climb over is preferably at least 50 mm. Preferably, the wheelchair of the invention is a class B wheelchair according to the harmonized standard EN 12184:2014.

Preferably, the wheelchair comprises a framework made of metal profiles, where the chassis, the positioning arm, the seat, the backrest, the footrest, and the armrest or the headrest are partly formed from these profiles. The armrests can be preferably positioned by rotating and sliding the rotational connection vertically so that the position of the armrest can be adjusted according to the needs of the specific user. Furthermore, the wheelchair comprises electronic or drive components such as drives, source, control electronics, operating and display elements, etc. The framework can then be provided with covers and padding. The structure of the framework of the profiles allows to create a relatively lightweight wheelchair, e.g. with a maximum weight of 100 kg, and allows to achieve a high degree of compactness and simultaneously mobility and adjustability of the wheelchair. The use of the covers then protects the framework, protects the user, and makes it possible to create a wheelchair that is valuable not only in terms of function but also design.

The structure of the wheelchair of the invention allows the seating part of the wheelchair to be lowered enough such that the user can, for example, pick up an object from the ground by themselves or help a child to dress. Preferably, it is also possible to raise the seating part above the level intended for standard travel to improve the user's spatial reach. The positioning arm tilts onto the chassis when the seat slides down, it may be possible for the seat to even sit on the chassis or for the positioning arm to lean against the chassis in the lowest position of the wheelchair. This allows the seat to be brought considerably closer to the ground. In addition, the lowering of the seating part, compared to the standard travel position or the height of conventional wheelchairs from the state of the art, allows the wheelchair to be driven e.g. under a table or sink for better access and user comfort when dining, working, etc. In addition, the reduced height of the seat can be advantageously used, for example, to increase the stability of the wheelchair, for example when driving on uneven terrain.

In addition, the positioning of the parts of the wheelchair, especially the footrest and/or backrest, allows the seated user to stretch, relieve long-term strained areas, use for rehabilitation exercises, etc. In addition, when using the control unit to operate the drives to move these and possibly other parts of the wheelchair, the control unit can be adapted to perform movements/readjustments of the parts of the wheelchair automatically, periodically, or in certain cycles. The adjustment of the individual parts, in particular the adjustment of the height of the seat above the chassis, the inclination of the seating area, the footrest, the inclination of the backrest, the position of the armrest, and the position of the headrest, can be individual and can also be linked together. For example, when the seat is lowered, the seating area can be continuously tilted backward, the footrest can be lifted, and the backrest tilted. In addition, the positioning of the parts of the wheelchair, in particular the lowering of the seat to the chassis and the tilting of the backrest to the seat, possibly together with the tilting of the footrest, also makes it easier to store the wheelchair when not in use, place it in the trunk of the automobile, etc. The continuous adjustability of the height of the wheelchair can preferably be used to raise the seat above the level of its use for driving. This is preferable when the user needs to reach higher placed objects or needs to see above a higher placed obstacle (frame of a window, etc.).

Thanks to the use of the positioning arm, the seating part of the wheelchair can be height-positioned in a relatively wide range, e.g. at least 25 cm or at least 30 cm or at least 35 cm. Thanks to the attachment of the arm to the chassis at the front and its tilting back, when the seating part, in particular the seat and all parts attached to it, moves down, this part also moves backward such that the center of gravity of the wheelchair also moves backward. This increases stability, for example when driving downhill or handling objects in a forward bend. In addition, the movement of the seating part backward when lowering the wheelchair helps when using the wheelchair as an automobile seat, especially when the user of the wheelchair is to drive the automobile. For placement in the automobile, it is usually advisable or necessary to adjust the wheelchair to a lowered position and moving the seating part backward adjusts the seat into a more suitable position relative to the steering wheel. In addition, the very possibility of height-adjustment of the seat relative to the chassis with wheels significantly facilitates the transfer of the wheelchair to the automobile, where during the preferred attachment of the transfer mechanism behind the seating part of the wheelchair it is not necessary to lift the entire wheelchair to a large extent, because the collision of the wheels with the sill of the vehicle is prevented by lifting the chassis relative to the seat.

The wheelchair of the invention is relatively lightweight and compact thanks to its structure, so it is easy to handle and can be loaded into a wide range of types of automobiles. In addition, thanks to the range of positioning of the wheelchair, particularly the height-adjustability of the seat, the operational range of the wheelchair is also greatly expanded, from lifting objects from the ground to working on higher positioned work surfaces. This also reduces the user's dependence on assistance. The maneuverability, driving safety, or design of the wheelchair is not compromised in any way.

The positioning arm preferably comprises a parallelogram comprising two profiles of the arm mutually offset in the longitudinal direction of the wheelchair, wherein each profile is rotationally connected to the chassis and to the frame of the seat. There are then two rotational connections between the positioning arm and the chassis, preferably both on the front quarter of the chassis, and together they ensure the tilting of the arm. However, it is possible to place only one of these connections on the front quarter with the other further back, but for example still in the front third of the length of the chassis. The length of the chassis may be measured as the length of the structure to which the wheels are attached but may also be measured as the distance between the most distant points of the front and back wheels when viewed from the side. The use of a parallelogram allows the seat to maintain an approximately horizontal orientation during the tilting (rotation of both profiles of the arm). The positioning linear drive can be connected e.g. to the profile of the arm located more in the front. In the most lowered position of the seat, the profiles of the arm may abut against each other and may be essentially parallel to the chassis in this position, for example, they may be at an angle of less than or equal to 20° to it. This allows the seat to be lowered considerably, bringing it closer to the ground, while maintaining sufficient firmness of the structure.

The rotational connection between the positioning arm and the chassis can be located between the front wheels of the wheelchair. In case a parallelogram is used, both these connections are preferably located between the front wheels. Alternatively, the parallelogram may be replaced by another suitable mechanism, e.g. a one-piece arm provided with a suitable rotational connection at each end.

The seat may be adjustable by the positioning linear drive to two extreme positions, wherein the lowest positioned point of the seating area of the seat is in the first, folded, position a maximum of 35 cm higher, more preferably a maximum of 30 cm higher, more preferably a maximum of 25 cm higher than the lowest positioned point of the wheels (i.e. higher than the ground when the wheelchair is placed on level ground) and in the second, standard, position it is at least 45 cm higher, preferably at least 50 or at least 55 cm higher than the lowest positioned point of the wheels. The positioning range between these two positions is preferably at least 15 cm or at least 20 cm. This ensures sufficient height-adjustability of the seat, both for standard travel, handling objects on workbenches, etc., and for handling objects on the ground, etc. In both of these positions, the approximately horizontal orientation of the seating area is still ensured such that it is still possible to sit on the wheelchair. In particular, for example, the inclination of the seating area does not exceed 30°, more preferably 25° or 20° even in the lowered position.

The wheels of at least one pair of wheels are preferably omnidirectional wheels, that is e.g. wheels having additional rolling elements on the circumference, with axes of rotation perpendicular to the axis of rotation of the wheel. For example, at least the front wheels can be omnidirectional. The omnidirectional wheels increase the maneuverability of the wheelchair, especially when turning, which can, for example, make it easier to pass through narrow spaces. It may also be possible to rotate the wheelchair in place, i.e. around the axis that intersects the wheelchair when viewed from above.

The frame of the seat may comprise a top piece and a bottom piece that are movably connected, wherein the bottom piece is connected to the positioning arm, the top piece carries the seating area, and the top piece is tiltable relative to the bottom piece. This tilting can be, for example, in the range of a maximum of ±15° or ±10°. The footrest, backrest etc. can be attached to the top or bottom piece. Thanks to the tilting of the top piece relative to the bottom one, it is possible to tilt the seating area of the seat relative to the chassis. For example, user comfort can be increased when the backrest is tilted if simultaneously the seating area is tilted. This function can be further utilized when driving downhill or uphill to increase the stability of the wheelchair and improve user comfort. When sitting in the wheelchair for a longer period of time, tilting the seating area can make it possible to change the places most stressed by sitting and thus to prevent pressure sores. The top and bottom pieces may for example be rotationally connected by a pin, or such a pin may also slide relative to one of the pieces. The tilting of the pieces can thus be a rotational movement or a combination of rotational movement and slide.

The wheelchair for transporting persons with disability may further comprise at least one of the following drives or any combination thereof: a drive for rotating and/or extending the footrest, a drive for rotating the backrest relative to the seat, a drive for tilting the top piece of the frame of the seat, a drive for rotating the armrest, and a drive for moving the headrest. Particularly preferable is the use of a drive for moving the backrest, for example together with a drive for moving the footrest and for tilting the seating area, i.e. the top piece of the frame of the seat. The drives can be powered from the same source as the travel drive of the wheelchair. They can be operated directly by the user via operating elements and/or can be connected to the control unit that controls the drives automatically or according to the user's instructions.

The wheelchair for transporting persons with disability may comprise an attachment for attaching the arm of the assembly for transporting the wheelchair to an automobile. The attachment may be, for example, an opening for inserting the end of the arm of the assembly, may comprise a lock for locking the arm of the assembly, etc. Preferably the attachment is on the seat, but it may also be located, for example, on the chassis or backrest. The wheelchair may further be adapted for communication with such an assembly, for example to adjust the positions of the parts of the wheelchair during the transfer of the wheelchair to the automobile. For example, the wheelchair comprises one or more connectors for data or power connection to the assembly and/or automobile. The control unit of the wheelchair can therefore establish a connection to the electronics of the automobile or the assembly for transporting the wheelchair via this connector, furthermore, charging of the wheelchair from the automobile can also be carried out via the connectors, etc.

The wheelchair may further comprise an auxiliary frame that is attached to the wheelchair and comprises an attachment for attaching the arm of the assembly for transporting the wheelchair to the automobile. The attachment can be, for example, by welding or screwing. The auxiliary frame can be adapted in shape and size to the specific type of wheelchair. Thus, the auxiliary frame is an element enabling any wheelchair of the invention to be adapted for transport by means of the given assembly for transporting the wheelchair. Electronic connectors for powering the wheelchair or its communicative connection with the assembly can also be a part of the auxiliary frame. A single connector, or a plurality of separate connectors, can be used for both data/communicative and power connection, both when connected by the auxiliary frame and when the arm is directly connected to the wheelchair. For example, the auxiliary frame can be a U-shaped profile that surrounds a part of the frame of the given wheelchair from the back, it can be a plate attached to the backrest of the wheelchair from the back or to the seat from below, etc.

The movement of the backrest relative to the seat and/or the footrest relative to the seat and/or the top piece of the frame of the seat relative to the bottom piece of the frame of the seat, preferably the movement of all three of these movements simultaneously, may be electronically or mechanically linked to the movement of the positioning linear drive. For example, the mechanical link may be implemented by means of rods, e.g. connecting the top piece of the frame of the seat to the backrest and the top piece of the frame of the seat to the positioning column. Electronic link can be implemented by the control unit operating the drives. The above movements can be linked with the height-adjustment of the seat relative to the chassis. Especially in the case of electronic link, this link can be selective, i.e. individual execution of these movements can be enabled according to the user's requirements.

A control unit adapted for operating the drives of the wheelchair as well as user operating elements data-connected to the control unit can therefore be a part of the wheelchair. These elements can be, for example, a joystick, buttons, touchscreen, voice assistant, etc. The control unit may control all or some of the drives, for example it may control the positioning of individual parts, but not the travel drive, which may be controlled directly by user operating elements.

### Description of Drawings

A summary of the invention is further clarified using exemplary embodiments thereof, which are described with reference to the accompanying drawings, in which:
- Fig. 1: schematically shows a lateral view of the wheelchair for transporting persons with disability in one exemplary embodiment of the present invention, wherein the wheelchair is in a standard travel position,
- Fig. 2: is a schematic view from the side of the wheelchair of fig. 1, wherein the covers of the wheelchair are not shown, so the frames and profiles forming the framework of the wheelchair are visible,
- Fig. 3: schematically shows a perspective view of the wheelchair of figs. 1 and 2, wherein the left armrest is lifted to a vertical position to facilitate getting on the wheelchair and getting off the wheelchair,
- Fig. 4: schematically shows a lateral view of the wheelchair in the lowered position, where the seating area is lower and more to the back and the backrest is tilted backward more than in the standard position of fig. 1,
- Fig. 5: is a schematic view from the side of the wheelchair of fig. 4, wherein the covers of the wheelchair are not shown, so the frames and profiles forming the framework of the wheelchair are visible, and wherein the footrest is more extended,
- Fig. 6: is a detailed schematic view from the side of the chassis and the positioning arm of the wheelchair without the covers in the standard position of the wheelchair,
- Fig. 7: is the view of fig. 6 in the lowered position of the wheelchair,
- Fig. 8: is the view of fig. 1, wherein the headrest is extended upward,
- Fig. 9: is a schematic detailed view from the back of the headrest and its attachment to the frame of the backrest,
- Fig. 10: is a detailed schematic view from the side of the armrest with a display unit and an operating element for driving the wheelchair,
- Fig. 11: is the view of fig. 1, wherein the footrest is extended and the backrest with the armrest are tilted backward,
- Fig. 12: is a detailed view of the drive for rotating and/or extending the footrest and of the rods that connect this drive to the footrest,
- Fig. 13: is the view of fig. 12, wherein the footrest is more extended than in fig. 12,
- Fig. 14: is the view of fig. 1, wherein the seating area of the seat is tilted backward and the backrest with the armrest are also tilted backward,
- Fig. 15: is the view of fig. 14, wherein the covers of the wheelchair are not shown, so the frames and profiles forming the framework of the wheelchair are visible,
- Fig. 16: is a detailed schematic view of the mechanism for connecting the top piece and the bottom piece of the frame of the seat, which allows the seating area of the seat to be tilted,
- Fig. 17: is the view of fig. 16, wherein the top piece is tilted backward,
- Fig. 18: is the view of fig. 1, wherein the left armrest is rotated to a vertical position,
- Fig. 19: is a schematic diagram of the connection of the electronic components of the wheelchair to the control unit and the data connection of the control unit to the user device and to the control unit of the assembly for transferring the wheelchair to and from the automobile.

### Exemplary Embodiments of the Invention

The invention will be further clarified using exemplary embodiments with reference to the respective drawings. An example of the present invention is a wheelchair 21 for transporting persons with disability, which includes a chassis 22, a seat 25 with a frame 31 of the seat, a backrest 26 with a frame 30 of the backrest, a footrest 27, an armrest 44, a headrest 45, a travel drive 29, and a power source 28 for this drive. The chassis 22 comprises two axles, each fitted with a pair of wheels. The frame 31 of the seat supports the seating area, preferably provided with a padding, and is movably connected to the frame 30 of the backrest, which preferably also supports the padding. The connection between the seat 25 and the backrest 26, implemented by the movable connection between their frames, allows the inclination of the backrest 26 to be adjusted according to the user's needs and preferably also allows the wheelchair 21 to be folded by tilting the backrest 26 forward onto the seat 25. This movable connection may be rotational, or it may be a combination of a rotational and sliding movement, implemented by, for example, rotation of one frame on pins slidable on the other frame. In some embodiments, this connection may comprise a plurality of joints or rotational connections to ensure better tilting of the backrest onto the seat, e.g. to achieve a greater compactness of the wheelchair when it is fully folded.

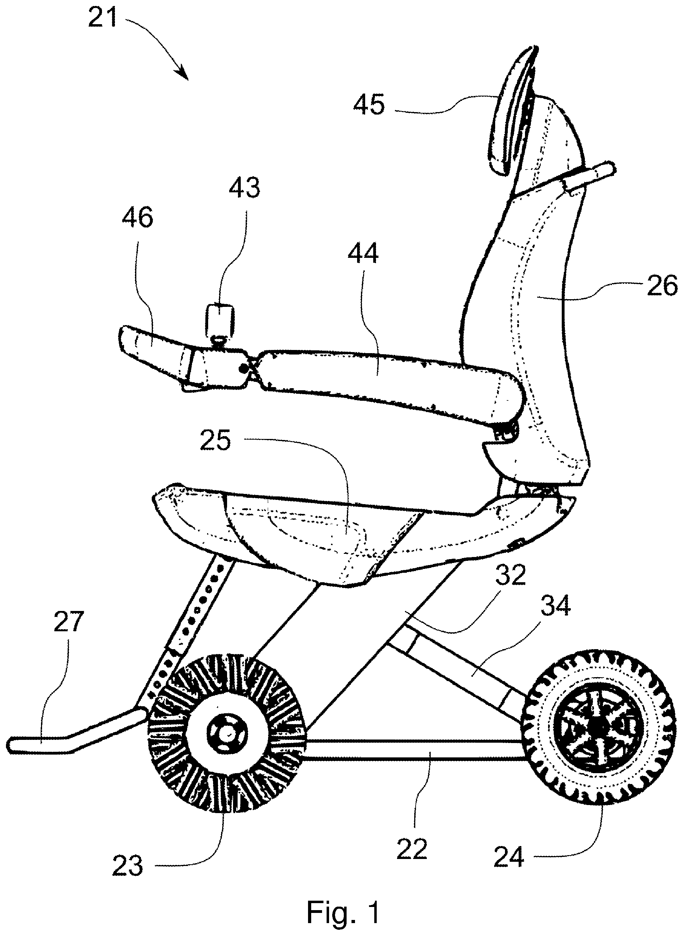

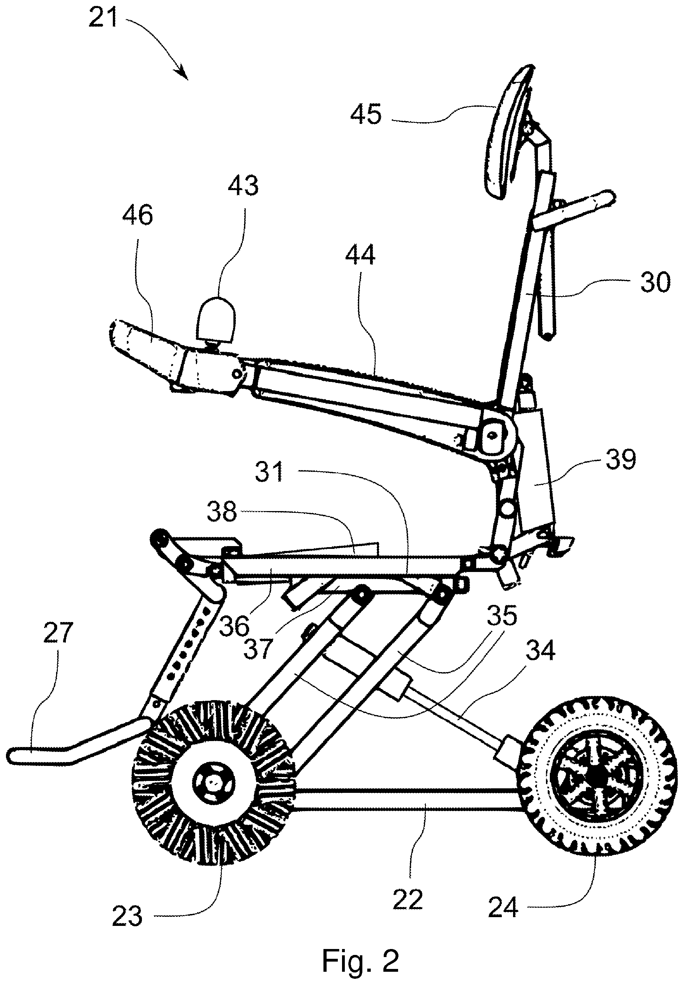

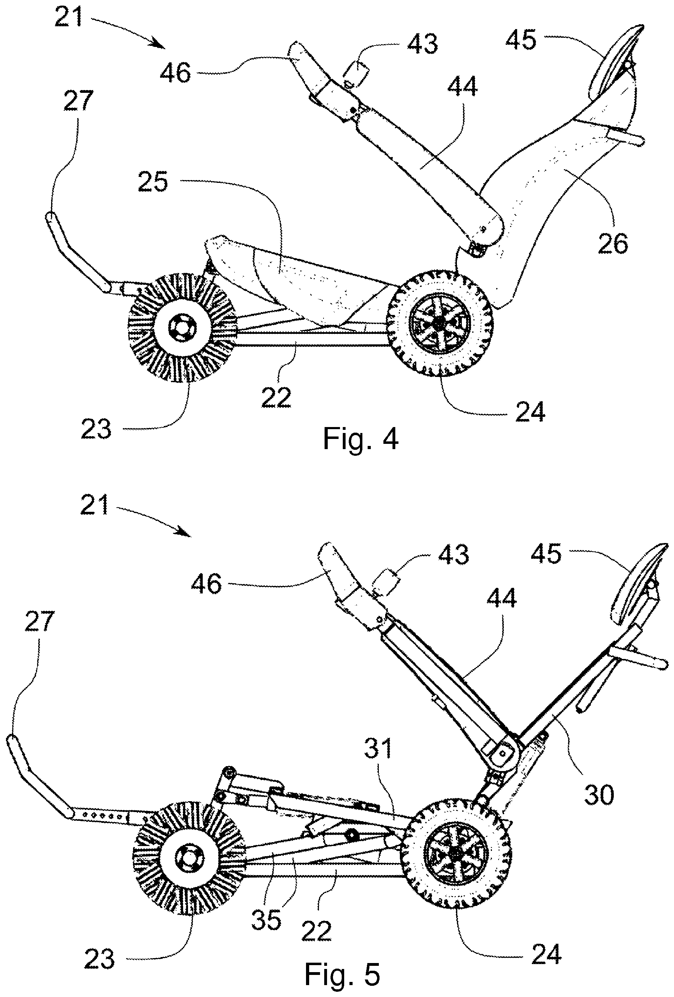

Furthermore, the frame 31 of the seat is movably connected to the footrest 27 to allow positioning of the footrest. The wheelchair 21 further comprises a positioning arm 32 that connects the frame 31 of the seat to the chassis 22. The positioning arm 32 is connected at its upper end to the frame 31 of the seat by at least one rotational connection and at its lower end, it is connected to the chassis 22 by at least one rotational connection at the front third, preferably quarter, of the length of the chassis 22. Preferably, the rotational connection 33 of the positioning arm 32 to the chassis 22 is located between the front wheels 23. The movement of the positioning arm 32, and thus the movement of the chassis 22 relative to the seating part of the wheelchair 21, is provided by a positioning linear drive 34, which is attached at the bottom end to the chassis 22, closer to the back wheels 24 than the positioning arm 32, and is attached at the upper end to the positioning arm 32. The linear drive is rotationally connected at both ends and when it is initiated, the two ends move away from each other or closer together. As a result, the inclination of the positioning arm 32 relative to the chassis 22 is adjusted, and thus the seat 25 and with it also the backrest 26, and other parts connected to it that form the seating part of the wheelchair 21 slide up or down. The wheelchair 21 can thus be adjusted between its positions, whereby in the standard position (see e.g. figs. 1 and 2) the seating part is in a position suitable for normal travel, where the backrest 26 is upright and the seat 25 is about half a meter above the ground, and in the lowered position the seat 25 is closer to the ground and the back wheels 24, the backrest 26 is tilted back and the footrest 27 can be slightly lifted (see e.g. figs. 4 and 5). Generally, in the standard position the distance of the seat 25, e.g. the lowest positioned point of the seating area, from the ground is at least 45 cm, preferably at least 50 cm, and in the lowered position of the wheelchair 21 this distance is a maximum of 30 cm, preferably a maximum of 25 cm. In the lowered position, the distance of the highest positioned point of the seat 25, at least with some slide of the seating area or backrest 26, from the ground may be a maximum of 50, more preferably a maximum of 45, and even more preferably a maximum of 40 centimeters from the ground.

When moving down, the seating part is moved backward at the same time. When viewed from the side, the frame 31 of the seat, the positioning arm 32, and the chassis 22 essentially define the shape of the letter "Z". The distance of the pair of the front wheels 23 from the pair of the back wheels 24 does not change during the positioning of the wheelchair 21, i.e. in particular the positioning mechanism is not implemented as a scissor mechanism. Preferably, the wheelchair 21 is also adjustable to other positions, in particular a plurality of positions between standard and (maximally) lowered, as well as to a raised position, which may be suitable for example for the user's work at kitchen counter and similar elevated work surfaces, and where the seat 25 may for example be more than 50 or more than 60 cm above the ground. Preferably, in all positions, the center of gravity of the wheelchair 21 is located between the front and back axles when viewed from above. The length of the wheelchair 21 is preferably for example a maximum of 150 cm. Its width is for example a maximum of 70 cm, more preferably a maximum of 60 cm. The speed of the wheelchair 21 can be limited to, for example, 15 km/h. The source 28 preferably provides a driving range of at least 20 km.

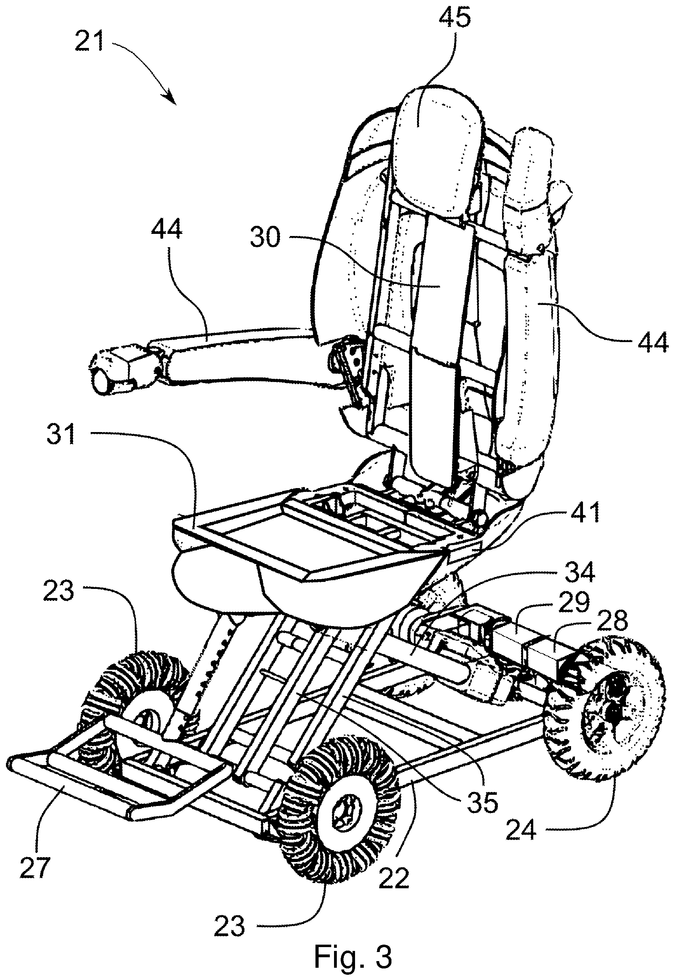

The chassis 22 may be made of, for example, metal profiles and/or composite materials, and preferably supports, in addition to the wheels, the positioning arm 32 and the positioning linear drive 34, the power source 28 and the travel drive 29 of the wheelchair 21, in particular the battery and the electric motor. Due to the weight of these components, it is more preferable to place them on the chassis 22 due to the stability of the wheelchair 21 and the energy requirement of positioning the seat 25. Furthermore, the chassis 22 may support, for example, brakes, a control unit 42, a gear train connecting the travel drive 29 to the driven wheels, preferably the back or all wheels, etc. Similarly, the frame 31 of the seat and frame 30 of the backrest, the positioning arm 32, and/or the rests may be made of metal profiles or plates as well. For example, duralumin or other aluminum alloy is preferably used to ensure a relatively low weight of the wheelchair 21. The arrangement of these components forming the framework of the wheelchair 21 can be seen, for example, in figs. 2 and 3. The wheelchair 21 preferably further comprises covers surrounding these support parts to ensure safety, protect these parts, and provide a user-friendly design. The positioning linear drive 34 may for example be implemented as a threaded rod connected to an electric motor, wherein this rod is attached to the positioning arm 32 through a housing with a complementary internal thread which is moved by rotating the rod. Alternatively, however, a pneumatic or hydraulic drive can be used. The positioning linear drive 34 is preferably attached to the chassis 22 in the back quarter of the chassis 22, preferably between the back wheels 24. Preferably, the chassis 22 defines a ground clearance of the wheelchair 21 of at least 50 mm, more preferably at least 60 mm.

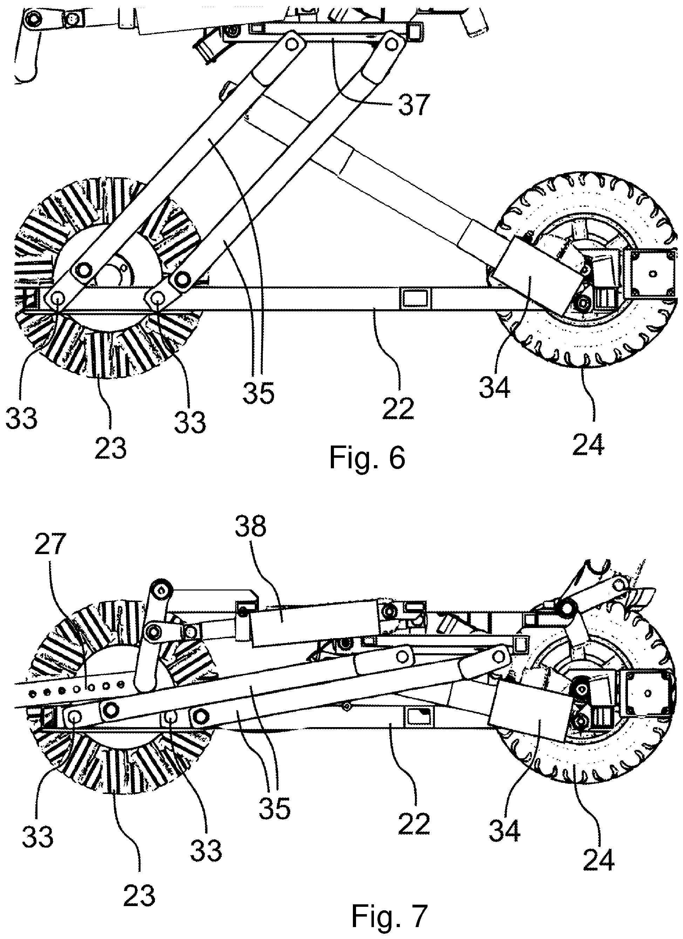

The positioning arm 32 preferably comprises a parallelogram comprising two profiles 35 of the arm parallel to each other and offset in the longitudinal direction of the wheelchair 21, i.e. in the standard direction of travel (see fig. 2). Each of these profiles 35 of the arm is rotationally connected to the chassis 22 or the frame 31 of the seat at both ends. On the chassis 22, both of these connections are preferably on the front quarter of the chassis 22, more preferably both are between the front wheels 23. The profiles 35 of the arm may be attached to the chassis 22 and/or frame 31 of the seat directly, or via additional connecting holders (see e.g. fig. 6), where the profile 35 of the arm is rotationally connected to the holder that is rotationally connected to the chassis 22 / frame such that a parallelogram is formed with certain clearances to allow smoother movement. The wheelchair 21 may comprise several such parallelograms, for example two on the sides of the wheelchair 21, but it may also comprise only one. The profiles 35 of the arm can then be doubled to ensure higher firmness (see e.g. fig. 3).

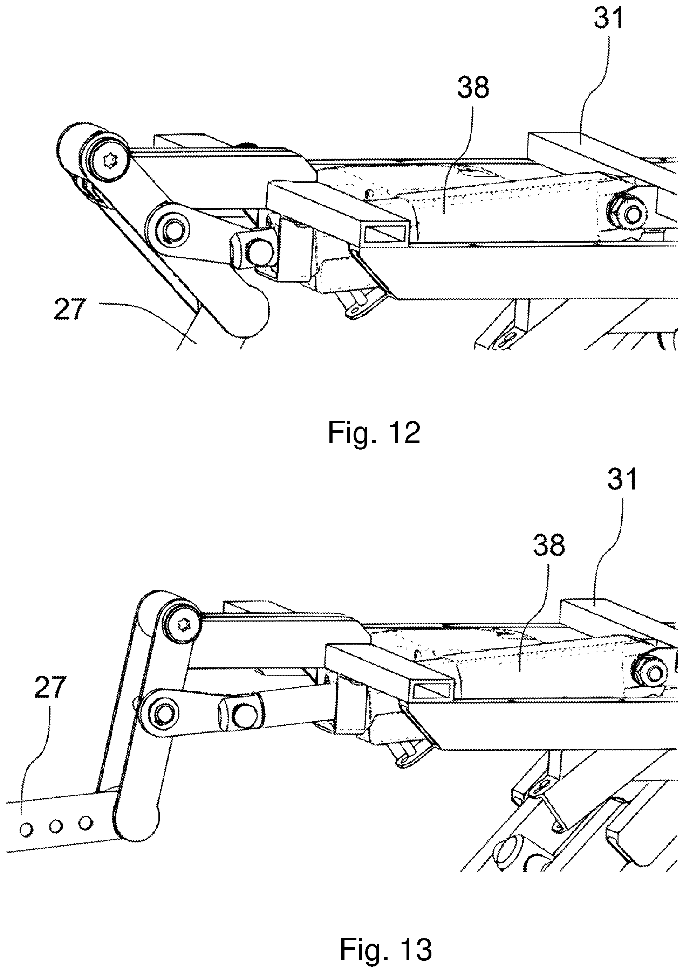

The footrest 27 is, in the shown embodiment, formed of metal profiles arranged in an approximate rectangle (see fig. 3) and is attached to the frame 31 of the seat by a telescopic rod that is rotational relative to the frame 31 of the seat - the adjustability of the footrest is apparent, for example, when comparing figures 2, 4, and 5 and a detail of its movable attachment is in figs. 7, 12, and 13. In an exemplary embodiment, the movement of the footrest 27 is preferably provided by a drive 38 for rotating and/or extending the footrest 27, such as a linear drive (e.g. a gear rack, threaded rod, hydraulic or pneumatic piston, etc.). In the shown embodiment, the telescopic rod of the footrest is provided with a rod at the end to which it is firmly connected at an obtuse angle, wherein this rod is rotationally connected to the frame 31 of the seat and the drive 38 engages it for rotating and/or extending the footrest 27. This drive is built into the seat 25 and powered by the source 28. For example, the length of the telescopic rod can be adjusted manually. In some embodiments, the rotation of the footrest can also be manually adjusted. The adjustment of the footrest 27 may be independent of the adjustment of other parts of the wheelchair 21, or it may be coupled with the adjustment of some other part, e.g. the footrest 27 may be lifted when the backrest is tilted or transferred to a lowered position.

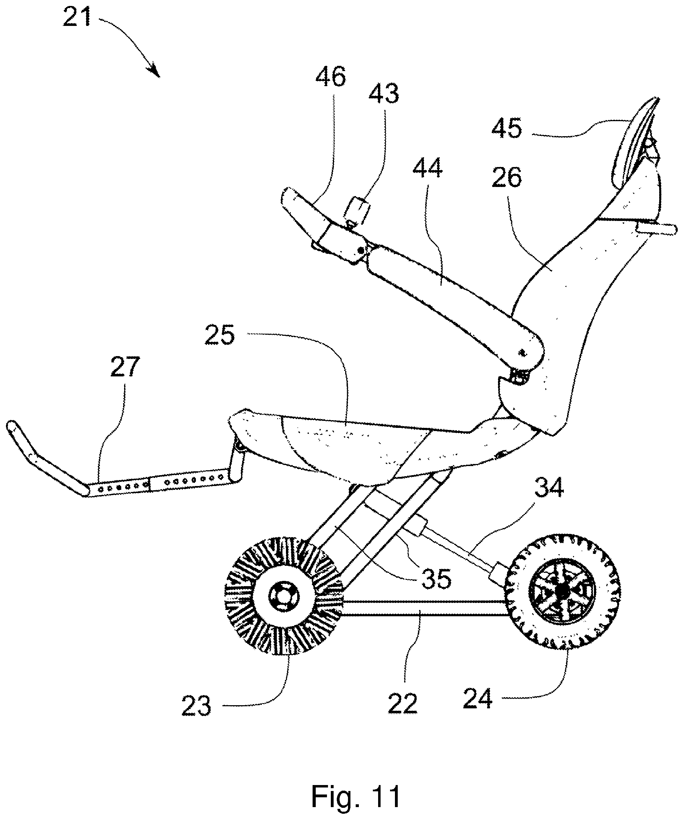

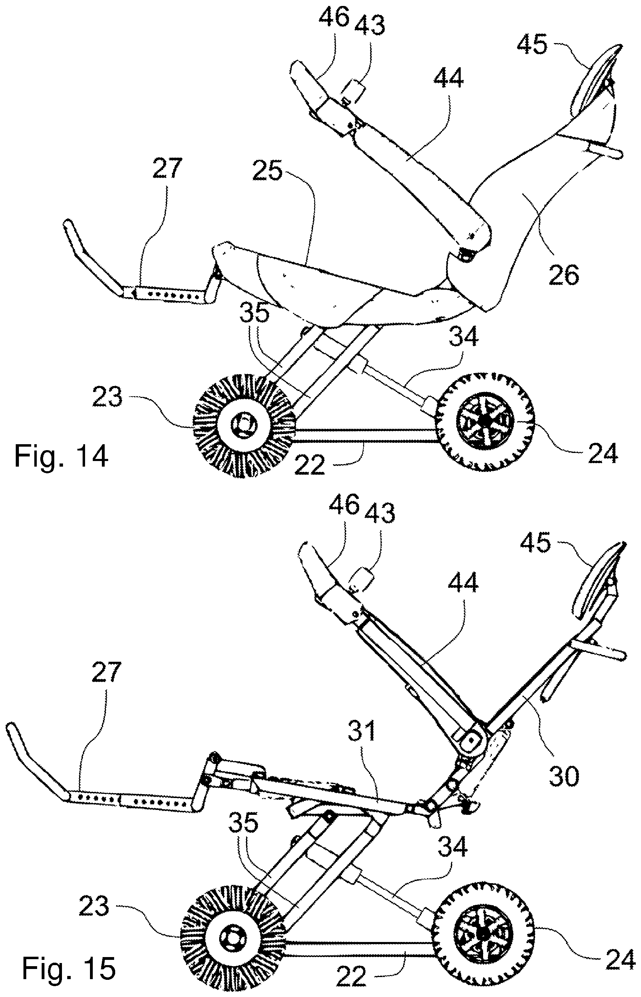

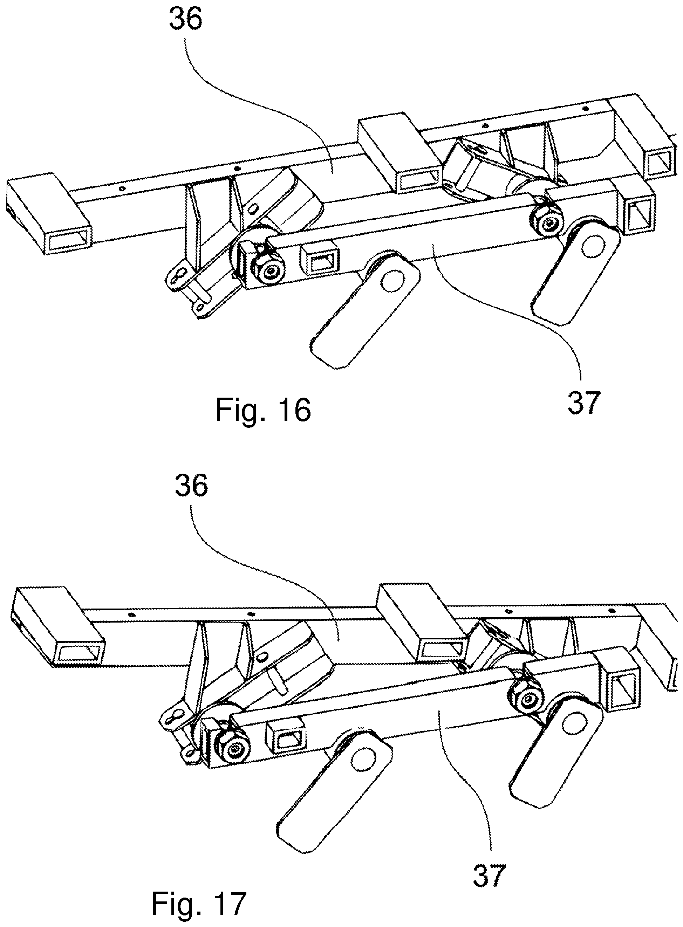

The frame 31 of the seat defines the approximately rectangular plan of the seat 25, provides the connection between the seating part of the wheelchair 21 (in particular the seat 25, the backrest 26, the footrest 27, the armrest 44, the headrest 45) and the drive part of the wheelchair 21 (in particular the positioning arm 32, the chassis 22, the drive, and the source 28) and serves to attach the footrest 27 and the backrest 26. A drive for adjusting the footrest 27, as described above, and, for example, a drive 39 for rotating the backrest 26 or tilting the seating area, as will be described later, can be built into it. Preferably the frame 31 of the seat comprises a top piece 36 and a bottom piece 37, which can be tilted relative to each other. The top piece 36 supports the seating area and the bottom piece 37 is connected to the positioning arm 32. Thus, the tilting of the top piece 36 ensures the tilting of the seating area (see figs. 14, 15 compared to e.g. fig. 11). The footrest 27 and backrest 26 may be connected to any of these pieces, and in the shown embodiment, they are attached to the top piece 36 such that they are moved when adjusting the inclination of the seating area. The connection of the top piece 36 to the bottom piece 37 may be rotational or rotationally slidable. For example, they may be connected by a pin. In the shown embodiment, they are connected by the mechanism shown in figs. 16 and 17, where the top piece 36 comprises two mutually non-parallel rails on each lateral side, in which sliding elements - pins, which are rotationally connected to the bottom piece 37 - are slidably attached. The movement of the sliding elements in the rails, due to the inclination of the rails, modifies the inclination of the top piece 36 - adjusts its rotation around a horizontal axis perpendicular to the longitudinal direction of the wheelchair 21. The range of this rotation may be, for example, 0±10°, where zero rotation corresponds to the parallel position of the top piece 36 with the bottom piece 37, i.e., substantially horizontal position of the top piece 36. Preferably, the tilting of the seating area of the seat 25 is provided by a drive 40 for tilting the top piece 36, e.g. an electronic drive. It may be a rotatory drive or a linear drive, engaging at one end the top piece 36 and at the other end the bottom piece 37. This drive is preferably built into the frame 31 of the seat. The power supply is preferably provided from the source 28 on the chassis 22, for example a power cable for all electronic components on the seating part of the wheelchair 21 may be routed on the positioning arm 32. This tilting may be independent of the adjustment of the other parts or may be coupled with the adjustment of the other parts.

The frame 30 of the backrest may be rotationally connected to the frame 31 of the seat, for example by a hinge, or by a combination of rotational and sliding movement. It may comprise metal profiles defining the shape of the backrest 26, elements for supporting the lumbar spine, etc. Rotation of the frame 30 of the backrest relative to the frame 31 of the seat is preferably provided by the drive 39 for rotating the backrest 26 (see fig. 2), for example by a linear drive engaging at one end the seat 25 and at the other end the backrest 26. In the shown embodiment, this drive is built into the backrest 26, but it may also be in the seat 25. The range of rotation of the backrest 26 preferably allows a tilting backward of at least 30° relative to the vertical position (see figs. 4 and 5) and allows a tilting forward preferably until the backrest 26 sits on the seat 25 such that the wheelchair 21 can be folded as much as possible. A handle may be attached to the frame 30 of the backrest, allowing possible manual handling of the wheelchair 21, and the headrest 45 and the armrest 44 on both lateral sides are attached thereto. The backrest 26 may be provided with light elements, e.g. to provide visibility from behind or to indicate a change in the direction of travel or to illuminate the space next to the wheelchair 21. For example, brake lights or parking lights may also be included. Further, a central switch of the wheelchair 21 may be located on the backrest 26 or the chassis 22 for disconnecting all electronic components of the wheelchair 21 from the source 28.

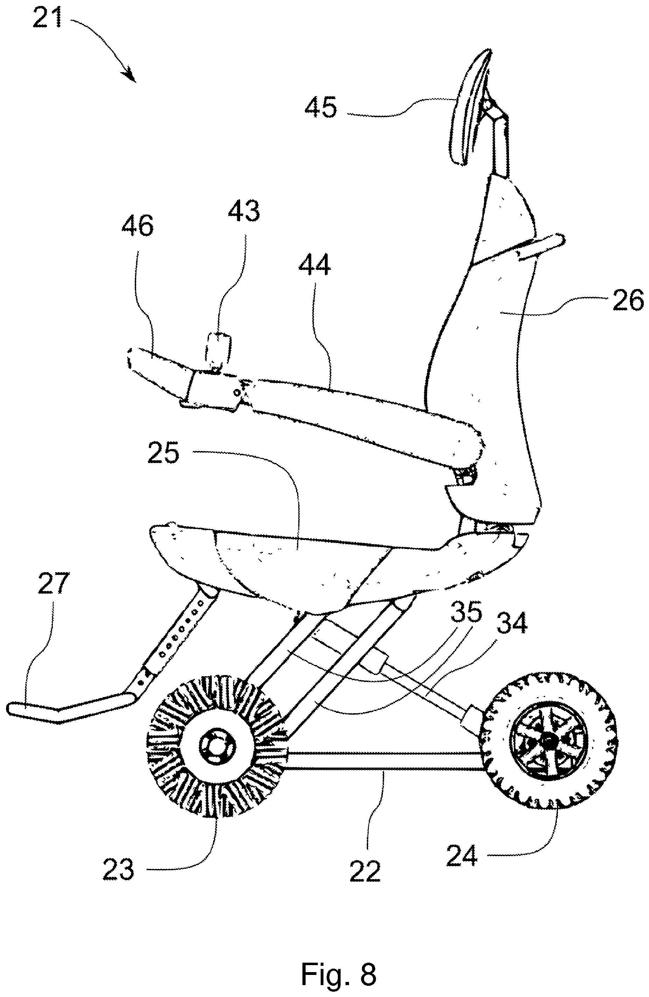

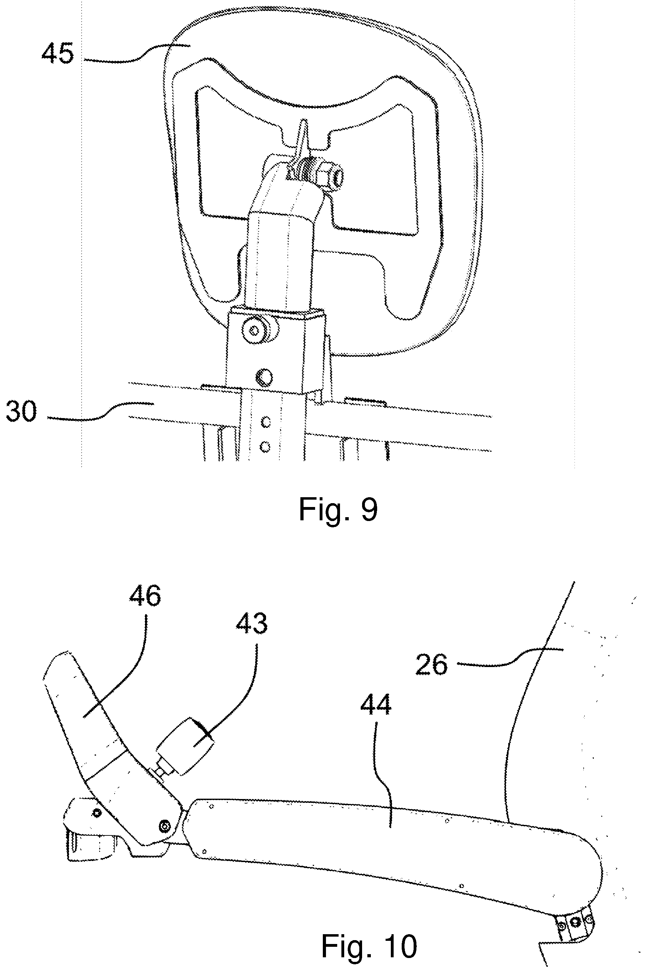

The headrest 45 can be preferably extended from the backrest 26 in the vertical direction and simultaneously it is preferably rotational around the horizontal axis perpendicular to the longitudinal direction of the wheelchair 21. The adjustment of the headrest 45 by these movements may be provided by a drive or drives, in the shown embodiment it is carried out manually, wherein it is ensured by elastic or frictional elements that the headrest remains in the position to which it is manually adjusted. The extended state of the headrest 45 is shown in fig. 8, a detailed view of the slidable and rotational attachment of the headrest is in fig. 9. As can be seen in fig. 9, the headrest 45 may comprise a frame in the form of a metal plate to which a functional part of the headrest, such as a cover with padding, is attached.

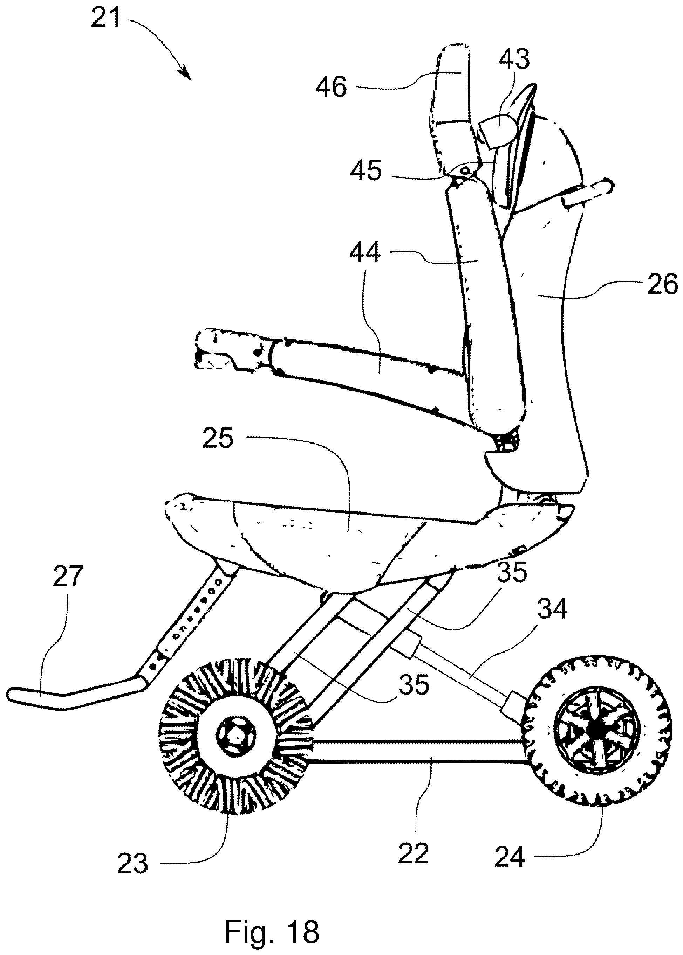

The armrests 44 are preferably both rotational by at least 90° such that they can be rotated up to facilitate getting off the wheelchair 21 and getting on it (see fig. 18, where the left rest is raised, and the right one is left in the standard horizontal position). They can be rotationally connected to the frame 30 of the backrest. In the exemplary embodiment, these armrests are rotationally attached on a joint or pin that is slidable in a rail or other slidable guide on the frame 30 of the backrest, wherein said rail is preferably substantially vertical in the standard position of the wheelchair 21. This allows the armrests 44 to be height-positioned by sliding them in these rails. The armrest 44 may comprise a metal frame provided with a cover and/or padding. In the shown embodiment, one of the armrests 44 further comprises operating elements 43, e.g. a joystick for operating the travel drive 29 and rotating the wheelchair 21, a lever for braking, buttons or sliders for adjusting the individual parts of the wheelchair 21, voice control, etc. The rotation may be provided in particular by rotating one wheel of the driven wheels pair faster than the other or by rotating these wheels in opposite directions. For example, the driven wheels are in the back and the front wheels 23 are omnidirectional to ensure smooth rotation in a relatively small space. Preferably, for example, the width of rotation at a point is a maximum of 200 cm, more preferably a maximum of 180 cm. The radius of rotation (during the travel) is preferably a maximum of 300 cm, more preferably a maximum of 280 cm.

The armrest 44 may further comprise a display device 46, i.e. in particular a display, for displaying information about the wheelchair 21 or the user, such as state of charge, maximum driving range, etc. It is also possible, for example, to display data from parking sensors or camera to ensure safe backing up of the wheelchair 21, to check the attachment of the arm to the wheelchair 21 (or the auxiliary frame, as will be discussed below), etc. The display device 46 may also serve as an operating element 43, in particular, a touch screen may be used or it may be possible to attach a smartphone or other user device 47 on the armrest 44 and communicatively connect it to the control unit 42 of the wheelchair 21 for displaying information on the phone and/or operating the wheelchair 21 by the phone. The armrests 44 may also be provided with, for example, a light for illuminating the ground in front of the wheelchair 21, an acoustic signalization, etc. A detailed view of one of the armrests 44, provided with the display device 46 and the operating element 43, is shown in fig. 10.

The wheelchair 21 preferably further comprises a control unit 42, data-connected to the drives, light sources, acoustic signalization source, power source 28, brakes, operating elements 43, display device 46, etc. However, more preferably, the operation of the brakes may be alternatively or additionally provided mechanically so that it is not dependent on the electronics of the wheelchair 21 or the state of charge of the source 28 in any way. For example, there may be an operating brake on the wheelchair 21, which can be controlled electronically, and a parking brake, which is independent of the electronics. The control unit 42 can therefore implement the adjustment of the individual parts of the wheelchair 21 with respect to the user's instructions received by the operating elements 43, provide movement of the wheelchair 21 by controlling the travel drive 29 or braking the wheels, perform diagnostics of the wheelchair 21 or diagnostics of the user if the wheelchair 21 is provided with diagnostic sensors, etc. For example, in some embodiments, the control unit 42 may be adapted to couple the movement of some of the drives, for example to tilt the backrest 26 and lift the footrest 27 when the wheelchair 21 is being transferred to the lowered position. These movements can be coupled also with the tilting of the seating area in some embodiments. An advantage of coupling these movements by the control unit 42 instead of, for example, mechanical coupling by rods is the possibility of deactivating the coupling with respect to the user's requirements.

The wheelchair 21 may further comprise an auxiliary frame, which is adapted to implement the connection (mechanically and/or electronically) of the wheelchair 21 with the arm of the assembly for transporting the wheelchair. For example, the auxiliary frame can be a U-shaped profile that surrounds a part of the frame of the given wheelchair 21 from the back, it can be a plate attached to the backrest 26 of the wheelchair 21 from the back or to the seat 25 from below, etc.

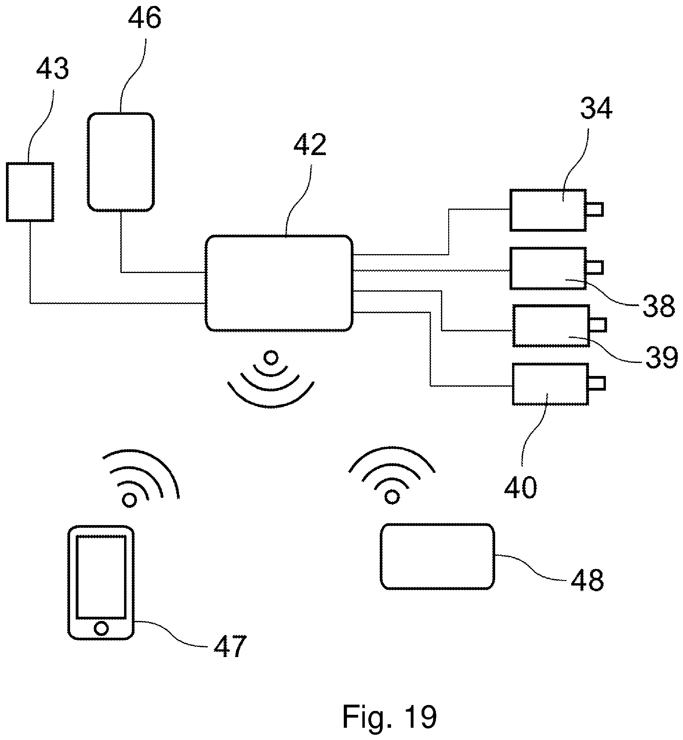

Fig. 19 schematically shows data connection between the control unit 42 and the drives, the operating elements 43, and the display device 46, and also shows the wireless communicative connection with the user device 47 and the control unit 48 of the assembly for transferring the wheelchair 21 to and from the automobile. To enable transfer by such an assembly, the wheelchair 21 may further comprise an attachment 10 for attaching an arm of the assembly, for example an opening into which a complementary end of the arm fits for attaching the wheelchair 21 and allowing it to be lifted and transferred between the exterior and interior of the automobile. The control unit 42 of the wheelchair 21 may then also enable a communicative connection with the control unit of the automobile, and preferably the wheelchair 21 is provided with a connector for recharging the source 28 from the automobile during the travel, for data connection with the automobile, etc.

The control unit 42 may also be adapted to remotely control the wheelchair 21, without a seated user, for example via the user device 47 wirelessly communicatively connected to the control unit 42.

In alternative embodiments, some of the movements of some of the parts of the wheelchair 21, which are provided by drives in the shown embodiment, may be realized manually and vice versa. For example, the armrests 44 or the headrest 45 can also be adjusted by the drive. Alternatively, for example, only the movement of the seat 25 relative to the chassis 22 may be operated electronically and the other movements are implemented manually. However, preferably at least the movement of the seat 25 relative to the chassis 22 and the movement of the footrest 27 and the backrest 26 are automated (electronically, pneumatically, etc.). In some embodiments, the control unit 42 may be adapted to operate at least the drive 38 for rotating and/or extending the footrest 27 and the drive 39 for rotating the backrest 26, preferably also the drive 40 for tilting the top piece, according to a predefined schedule, in particular in cycles, to provide automatic exercise or stretching of the user or to periodically change the position of their seating to prevent pressure sores.

In some embodiments, the front wheels 23 can also be the driven wheels. Embodiments are also possible in which the wheelchair 21 comprises more than four wheels, for example it may comprise an axle with auxiliary wheels in front of the front wheels 23 or behind the back wheels 24. The front wheels 23 or the back wheels 24 - in particular the non-driven pair of wheels, can also be individually rotational around the vertical axis in some embodiments.

**List of Reference Signs**

| | | | |
|---|---|---|---|
| 21 | - Wheelchair | 45 | - Headrest |
| 22 | - Chassis | 46 | - Display device |
| 23 | - Front wheel | 47 | - User device |
| 24 | - Back wheel | 48 | - Control unit of the assembly |
| 25 | - Seat | | |
| 26 | - Backrest | | |
| 27 | - Footrest | | |
| 28 | - Source | | |
| 29 | - Travel drive | | |
| 30 | - Frame of the backrest | | |
| 31 | - Frame of the seat | | |
| 32 | - Positioning arm | | |
| 33 | - Rotational connection of the positioning arm to the chassis | | |
| 34 | - Positioning linear drive | | |
| 35 | - Profile of the arm | | |
| 36 | - Top piece | | |
| 37 | - Bottom piece | | |
| 38 | - Drive for rotating and/or extending the footrest | | |
| 39 | - Drive for rotating the backrest | | |
| 40 | - Drive for tilting the top piece | | |
| 41 | - Attachment for attaching the arm of the assembly | | |
| 42 | - Control unit | | |
| 43 | - Operating elements | | |
| 44 | - Armrest | | |

## Claims

1. A wheelchair (21) for transporting persons with disability comprising a chassis (22) provided with a pair of front wheels (23) and a pair of back wheels (24), a seat (25), a backrest (26), a footrest (27), a power source (28), and a travel drive (29), wherein the backrest (26) comprises a frame (30) of the backrest and the seat (25) comprises a frame (31) of the seat movably connected to the frame (30) of the backrest, to the footrest (27), and to the chassis (22), wherein the pair of the front wheels (23) is held at a constant distance from the pair of the back wheels (24) by the chassis (22), **characterized in that** the frame (31) of the seat is connected to the chassis (22) by a positioning arm (32), which is at its upper end rotationally connected to the frame (31) of the seat and at its lower end rotationally connected to the chassis (22), wherein the rotational connection (33) of the positioning arm (32) to the chassis (22) is located at the front third of the length of the chassis (22), wherein the wheelchair (21) further comprises a positioning linear drive (34) for tilting the positioning arm (32) relative to the chassis (22), wherein the positioning linear drive (34)is connected at one end to the chassis (22) and at the other end it is connected to the positioning arm (32), wherein the connection of the positioning linear drive (34) to the chassis (22) is located closer to the back wheels (24) than the rotational connection (33) of the positioning arm (32) to the chassis (22).

2. The wheelchair (21) for transporting persons with disability according to claim 1, **characterized in that** the positioning arm (32) comprises a parallelogram comprising two profiles (35) of the arm offset from each other in the longitudinal direction of the wheelchair (21), wherein each profile (35) of the arm is rotationally connected to the chassis (22) and to the frame (31) of the seat.

3. The wheelchair (21) for transporting persons with disability according to any one of claims 1 or 2, **characterized in that** the rotational connection of the positioning arm (32) to the chassis (22) is located between the front wheels (23) of the wheelchair (21).

4. The wheelchair (21) for transporting persons with disability according to any one of the preceding claims, **characterized in that** the seat (25) is adjustable by the positioning linear drive (34) to two extreme positions, wherein the lowest positioned point of a seating area of the seat (25) is in the first position a maximum of 35 cm higher than the lowest positioned point of the wheels, and in the second position it is at least 45 cm higher than the lowest positioned point of the wheels.

5. The wheelchair (21) for transporting persons with disability according to any one of the preceding claims, **characterized in that** the wheels of at least one pair of wheels are omnidirectional wheels.

6. The wheelchair (21) for transporting persons with disability according to any one of the preceding claims, **characterized in that** the frame (31) of the seat comprises a top piece (36) and a bottom piece (37) which are movably connected, wherein the bottom piece (37) is connected to the positioning arm (32), the top piece (36) supports the seating area and the top piece (36) is tiltable relative to the bottom piece (37).

7. The wheelchair (21) for transporting persons with disability according to any one of preceding claims, **characterized in that** it further comprises at least one of the following drives: a drive (38) for rotating and/or extending the footrest, a drive (39) for rotating the backrest (26) relative to the seat (25), a drive (40) for tilting the top piece (36) of the frame (31) of the seat, a drive for rotating the armrest (44), and a drive for moving the headrest (45).

8. The wheelchair (21) for transporting persons with disability according to any one of preceding claims, **characterized in that** it comprises an attachment (41) for attaching an arm of an assembly for transporting the wheelchair (21) to an automobile.

9. The wheelchair (21) for transporting persons with disability according to any one of claims 1 to 7, **characterized in that** it comprises an auxiliary frame for attaching an arm of an assembly for transporting the wheelchair (21) to an automobile, wherein the auxiliary frame is attached to the wheelchair (21).

10. The wheelchair (21) for transporting persons with disability according to any one of preceding claims, **characterized in that** the movement of the backrest (26) relative to the seat (25) and/or the footrest (27) relative to the seat (25) and/or the top piece (36) of the frame (31) of the seat relative to the bottom piece (37) of the frame (31) of the seat is electronically or mechanically coupled to the movement of the positioning linear drive (34).

11. The wheelchair (21) for transporting persons with disability according to any one of preceding claims **characterized in that** it comprises a control unit (42) adapted for controlling the drives of the wheelchair (21) and it comprises user operating elements (43) data-connected with the control unit (42).

12. The wheelchair (21) for transporting persons with disability according to any one of preceding claims **characterized in that** in all positions of tilting of the positioning arm (32), the seating area of the seat (25) has an inclination of at most 30° relative to a horizontal plane, and the center of mass of the wheelchair (21), when viewed from above, is located behind the pair of the front wheels (23) in all these positions.

## Patentansprüche

1. Ein Rollstuhl (21) zum Transport von Personen mit Behinderung, umfassend ein mit einem Paar Vorderrädern (23) und einem Paar Hinterrädern (24) versehenes Fahrgestell (22), einen Sitz (25), eine Rückenlehne (26), eine Fußstütze (27), eine Kraftquelle (28) und einen Fahrantrieb (29) umfasst, wobei die Rückenlehne (26) einen Rückenlehnerahmen (30) umfasst und der Sitz (25) einen Sitzrahmen (31) umfasst, der beweglich mit dem Rückenlehnerahmen (30), der Fußstütze (27) und dem Fahrgestell (22) verbunden ist, wobei das Paar Vorderrädern (23) durch das Fahrgestell (22) in einem konstanten Abstand zum Paar Hinterrädern (24) gehalten wird, **dadurch gekennzeichnet, dass** der Sitzrahmen (31) mit dem Fahrgestell (22) durch einen Positionierungsarm (32) verbunden ist, der an seinem oberen Ende drehbar mit dem Sitzrahmen (31) verbunden ist und an seinem unteren Ende drehbar mit dem Fahrgestell (22) verbunden ist, wobei sich die Drehverbindung (33) des Positionierungsarms (32) mit dem Fahrgestell (22) im vorderen Drittel der Länge des Fahrgestells (22) befindet, wobei der Rollstuhl (21) ferner einen Positionierungslinearantrieb (34) zum Neigen des Positionierungsarms (32) relativ zum Fahrgestell (22) umfasst, wobei der Positionierungslinearantrieb (34) an einem Ende mit dem Fahrgestell (22) und am anderen Ende mit dem Positionierungsarm (32) verbunden ist, wobei die Verbindung des Positionierungslinearantriebs (34) mit dem Fahrgestell (22) näher an den Hinterrädern (24) angeordnet ist als die Drehverbindung (33) des Positionierungsarms (32) mit dem Fahrgestell (22).

2. Der Rollstuhl (21) zum Transport von Personen mit Behinderung gemäß Anspruch 1, **dadurch gekennzeichnet, dass** der Positionierungsarm (32) ein Parallelogramm umfasst, das zwei Profile (35) des Arms umfasst, die in Längsrichtung des Rollstuhls (21) versetzt zueinander angeordnet sind, wobei jedes Profil (35) des Arms drehbar mit dem Fahrgestell (22) und mit dem Sitzrahmen (31) verbunden ist.

3. Der Rollstuhl (21) zum Transport von Personen mit Behinderung gemäß einem der Ansprüche 1 oder 2, **dadurch gekennzeichnet, dass** die Drehverbindung des Positionierungsarms (32) mit dem Fahrgestell (22) zwischen den Vorderrädern (23) des Rollstuhls (21) angeordnet ist.

4. Der Rollstuhl (21) zum Transport von Personen mit Behinderung gemäß einem der vorstehenden Ansprüche, **dadurch gekennzeichnet, dass** der Sitz (25) durch den Positionierungslinearantrieb (34) in zwei Endpositionen verstellbar ist, wobei der tiefste Punkt der Sitzfläche des Sitzes (25) in der ersten Position maximal 35 cm höher als der tiefste Punkt der Räder liegt und in der zweiten Position mindestens 45 cm höher als der tiefste Punkt der Räder liegt.

5. Der Rollstuhl (21) zum Transport von Personen mit Behinderung gemäß einem der vorstehenden Ansprüche, **dadurch gekennzeichnet, dass** die Räder mindestens eines Radpaares omnidirektionale Räder sind.

6. Der Rollstuhl (21) zum Transport von Personen mit Behinderung gemäß einem der vorstehenden Ansprüche, **dadurch gekennzeichnet, dass** der Sitzrahmen (31) ein Oberteil (36) und ein Unterteil (37) umfasst, die beweglich miteinander verbunden sind, wobei das Unterteil (37) mit dem Positionierungsarm (32) verbunden ist, das Oberteil (36) die Sitzfläche trägt und das Oberteil (36) relativ zum Unterteil (37) kippbar ist.

7. Der Rollstuhl (21) zum Transport von Personen mit Behinderung gemäß einem der vorstehenden Ansprüche, **dadurch gekennzeichnet, dass** er ferner mindestens einen der folgenden Antriebe umfasst: einen Antrieb (38) zum Drehen und/oder Ausfahren der Fußstütze, einen Antrieb (39) zum Drehen der Rückenlehne (26) relativ zum Sitz (25), einen Antrieb (40) zum Neigen des Oberteils (36) des Sitzrahmens (31), einen Antrieb zum Drehen einer Armlehne (44), und einen Antrieb zum Bewegen einer Kopfstütze (45).

8. Der Rollstuhl (21) zum Transport von Personen mit Behinderung gemäß einem der vorstehenden Ansprüche, **dadurch gekennzeichnet, dass** er eine Befestigung (41) zum Befestigen eines Arms einer Anordnung zum Transport des Rollstuhls (21) an einem Kraftwagen umfasst.

9. Der Rollstuhl (21) zum Transport von Personen mit Behinderung gemäß einem der Ansprüche 1 bis 7, **dadurch gekennzeichnet, dass** er einen Hilfsrahmen zum Befestigen eines Arms einer Anordnung zum Transport des Rollstuhls (21) an einem Kraftwagen umfasst, wobei der Hilfsrahmen am Rollstuhl (21) befestigt ist.

10. Der Rollstuhl (21) zum Transport von Personen mit Behinderung gemäß einem der vorstehenden Ansprüche, **dadurch gekennzeichnet, dass** die Bewegung der Rückenlehne (26) relativ zum Sitz (25) und/oder der Fußstütze (27) relativ zum Sitz (25) und/oder des Oberteils (36) des Sitzrahmens (31) relativ zum Unterteil (37) des Sitzrahmens (31) elektronisch oder mechanisch mit der Bewegung des Positionierungslinearantrieb (34) gekoppelt ist.

11. Der Rollstuhl (21) zum Transport von Personen mit Behinderung gemäß einem der vorstehenden Ansprüche, **dadurch gekennzeichnet, dass** er eine Steuereinheit (42) umfasst, die zum Steuern der Antriebe des Rollstuhls (21) ausgelegt ist, und dass er Benutzerbedienelemente (43) umfasst, die mit der Steuereinheit (42) datenverbunden sind.

12. Der Rollstuhl (21) zum Transport von Personen mit Behinderung gemäß einem der vorstehenden Ansprüche, **dadurch gekennzeichnet, dass** in allen Neigungspositionen des Positionierungsarms (32) die Sitzfläche des Sitzes (25) eine Neigung von höchstens 30° gegenüber einer horizontalen Ebene aufweist und der Schwerpunkt des Rollstuhls (21) in der Draufsicht in allen diesen Positionen hinter dem Paar Vorderrädern (23) liegt.

## Revendications

1. Un fauteuil roulant (21) pour le transport de personnes en situation de handicap, comprenant un châssis (22) muni d'une paire de roues avant (23) et d'une paire de roues arrière (24), un siège (25), un dossier (26), un repose-pieds (27), une source d'énergie (28) et un dispositif d'entraînement (29), où le dossier (26) comprend un cadre (30) du dossier et le siège (25) comprend un cadre (31) du siège relié de manière mobile au cadre (30) du dossier, au repose-pieds (27) et au châssis (22), où la paire de roues avant (23) est maintenue à une distance constante de la paire de roues arrière (24) par le châssis (22), **caractérisé en ce que** le cadre (31) du siège est relié au châssis (22) par un bras de positionnement (32) qui est relié de manière rotative à son extrémité supérieure au cadre (31) du siège et à son extrémité inférieure au châssis (22), où la liaison rotative (33) du bras de positionnement (32) au châssis (22) est située dans le tiers avant de la longueur du châssis (22), où le fauteuil roulant (21) comprend en outre un entraînement linéaire de positionnement (34) pour incliner le bras de positionnement (32) par rapport au châssis (22), où l'entraînement linéaire de positionnement (34) est relié à une extrémité au châssis (22) et à l'autre extrémité au bras de positionnement (32), où la liaison de l'entraînement linéaire de positionnement (34) au châssis (22) est située plus près des roues arrière (24) que la liaison rotative (33) du bras de positionnement (32) au châssis (22).

2. Le fauteuil roulant (21) pour le transport de personnes en situation de handicap selon la revendication 1, **caractérisé en ce que** le bras de positionnement (32) comprend un parallélogramme comprenant deux profilés (35) du bras, décalés l'un par rapport à l'autre dans la direction longitudinale du fauteuil roulant (21), où chaque profilé (35) du bras est relié de manière rotative au châssis (22) et au cadre (31) du siège.

3. Le fauteuil roulant (21) pour le transport de personnes en situation de handicap selon l'une quelconque des revendications 1 ou 2, **caractérisé en ce que** la liaison rotative du bras de positionnement (32) au châssis (22) est située entre les roues avant (23) du fauteuil roulant (21).

4. Le fauteuil roulant (21) pour le transport de personnes en situation de handicap selon l'une quelconque des revendications précédentes, **caractérisé en ce que** le siège (25) est réglable par l'entraînement linéaire de positionnement (34) sur deux positions extrêmes, où le point le plus bas de la zone d'assise du siège (25) est, dans la première position, au maximum 35 cm plus haut que le point le plus bas des roues, et dans la deuxième position, il est au moins 45 cm plus haut que le point le plus bas des roues.

5. Le fauteuil roulant (21) pour le transport de personnes en situation de handicap selon l'une quelconque des revendications précédentes, **caractérisé en ce que** les roues d'au moins une paire de roues sont des roues omnidirectionnelles.

6. Le fauteuil roulant (21) pour le transport de personnes en situation de handicap selon l'une quelconque des revendications précédentes, **caractérisé en ce que** le cadre (31) du siège comprend une partie supérieure (36) et une partie inférieure (37) qui sont reliées de manière mobile l'une à l'autre, où la partie inférieure (37) est reliée au bras de positionnement (32), la pièce supérieure (36) supporte la zone d'assise et la pièce supérieure (36) est inclinable par rapport à la pièce inférieure (37).

7. Le fauteuil roulant (21) pour le transport de personnes en situation de handicap selon l'une quelconque des revendications précédentes, **caractérisé en ce qu'**il comprend en outre au moins l'un des entraînements suivants : un entraînement (38) pour faire pivoter et/ou déployer le repose-pieds, un entraînement (39) pour faire pivoter le dossier (26) par rapport au siège (25), un entraînement (40) pour incliner la partie supérieure (36) du cadre (31) du siège, un entraînement pour faire pivoter un accoudoir (44), et un entraînement pour déplacer un appui-tête (45).

8. Le fauteuil roulant (21) pour le transport de personnes en situation de handicap selon l'une quelconque des revendications précédentes, **caractérisé en ce qu'**il comprend une fixation (41) pour fixer un bras d'un ensemble pour le transport du fauteuil roulant (21) à une automobile.

9. Le fauteuil roulant (21) pour le transport de personnes en situation de handicap selon l'une quelconque des revendications 1 à 7, **caractérisé en ce qu'il** comprend un cadre auxiliaire pour fixer un bras d'un ensemble pour le transport du fauteuil roulant (21) à une automobile, où le cadre auxiliaire est fixé au fauteuil roulant (21).

10. Le fauteuil roulant (21) pour le transport de personnes en situation de handicap selon l'une quelconque des revendications précédentes, **caractérisé en ce que** le mouvement du dossier (26) par rapport au siège (25) et/ou du repose-pieds (27) par rapport au siège (25) et/ou de la partie supérieure (36) du cadre (31) du siège par rapport à la partie inférieure (37) du cadre (31) du siège est couplé électroniquement ou mécaniquement au mouvement de l'entraînement linéaire de positionnement (34).

11. Le fauteuil roulant (21) pour le transport de personnes en situation de handicap selon l'une quelconque des revendications précédentes, **caractérisé en ce qu'il** comprend une unité de commande (42) adaptée pour commander les entraînements du fauteuil roulant (21) et il comprend des éléments de commande utilisateur (43) connectés en données avec l'unité de commande (42).

12. Le fauteuil roulant (21) pour le transport de personnes en situation de handicap selon l'une quelconque des revendications précédentes, **caractérisé en ce que** dans toutes les positions d'inclinaison du bras de positionnement (32), la zone d'assise du siège (25) présente une inclinaison maximale de 30° par rapport à un plan horizontal, et le centre de gravité du fauteuil roulant (21), vu de dessus, est situé derrière la paire de roues avant (23) dans toutes ces positions.
